# EUROPEAN PATENT APPLICATION

(11) **EP 4 447 214 A1**
(43) Date of publication of application: **16.10.2024**
(21) Application number: 22919451.9
(22) Date of filing: 14.01.2022
(51) Int. Cl.: H01M 50/244, H01M 10/48

(54) **ENERGY STORAGE CONTAINER, AND METHOD AND DEVICE FOR PREPARING ENERGY STORAGE CONTAINER**

(71) Applicant: Contemporary Amperex Technology (Hong Kong) Limited, Central, Central And Western District (HK)
(72) Inventor: ZHENG, Chenling, Ningde, Fujian 352100 (CN); LIU, Yue, Ningde, Fujian 352100 (CN); WANG, Zengzhong, Ningde, Fujian 352100 (CN)
(74) Representative: Rowlands, Stuart Michael
(86) International application number: PCT/CN2022/071958
(87) International publication number: WO 2023/133791

(57) **Abstract**

Provided are an energy storage container (100), and a method and device for preparing the energy storage container (100). Both the thermal insulation property and safety of the energy storage container (100) can be taken into account. The energy storage container (100) comprises: a pressure relief mechanism (110), which is arranged on a first wall (101) of the energy storage container (100); and an isolation member (120), which is arranged on the side of the pressure relief mechanism (110) that faces the interior of the energy storage container (100), wherein the interior of the energy storage container (100) is used for accommodating at least one battery (10); a closed space (102) is formed between the isolation member (120) and the pressure relief mechanism (110); the isolation member (120) is configured to be actuated when the internal pressure or temperature of the energy storage container (100) reaches a threshold value, so as to release the internal pressure or temperature to the closed space (102); and the pressure relief mechanism (110) is configured to be actuated when the pressure or temperature in the closed space (102) reaches a threshold value, so as to release the internal pressure or temperature to outside of the energy storage container

## Description

### TECHNICAL FIELD

The present application relates to the field of energy storage technologies, and particularly, to an energy storage container, and a method and an apparatus for producing an energy storage container.

### BACKGROUND

Under the background of increasing support for the development of new energy technologies globally, various technologies related to energy storage have important research significance, where containers are widely used as an energy storage method. In order to ensure performance of a battery stored in an energy storage container, designs related to heat preservation and safety of the energy storage container are very important.

In view of this, how to balance heat preservation and safety of an energy storage container is an urgent technical problem to be solved.

### SUMMARY

The present application provides an energy storage container, and a method and an apparatus for producing an energy storage container, which could balance heat preservation and safety of the energy storage container.

In a first aspect, an energy storage container includes: a pressure relief mechanism provided on a first wall of the energy storage container; and an isolating member provided on a side of the pressure relief mechanism facing an interior of the energy storage container, the interior of the energy storage container being configured to accommodate at least one battery, and an enclosed space being formed between the isolating member and the pressure relief mechanism; where the isolating member is configured to be actuated when an internal pressure or temperature of the energy storage container reaches a threshold, to relieve the internal pressure or temperature to the enclosed space, and the pressure relief mechanism is configured to be actuated when a pressure or temperature of the enclosed space reaches a threshold, to relieve the internal pressure or temperature to an exterior of the energy storage container.

According to the technical solutions of the embodiments of the present application, when the internal pressure or temperature of the energy storage container reaches a certain threshold, the isolating member and the pressure relief mechanism can be actuated sequentially, and the internal pressure or temperature of the energy storage container may be relieved to the exterior of the energy storage container through the isolating member and the pressure relief mechanism, to prevent explosion of the energy storage container exploding and ensuring safety performance of the energy storage container. On this basis, when the internal pressure or temperature of the energy storage container does not reach a certain threshold, the isolating member and the pressure relief mechanism are not actuated, and the enclosed space between the isolating member and the pressure relief mechanism can preserve heat for an internal space of the energy storage container for accommodating the battery, thereby ensuring performance of the battery stored in the internal space.

In some possible implementation manners, the isolating member is provided with a weakened zone, and the weakened zone is capable of fracturing when the internal pressure or temperature of the energy storage container reaches the threshold, to relieve the internal pressure or temperature to the enclosed space.

According to the technical solutions of the implementation manners, the isolating member is provided with a weakened zone to realize the purpose of actuating the isolating member when the internal pressure or temperature of the energy storage container reaches the threshold. The implementation manners are simple and have low manufacturing costs.

In some possible implementation manners, a thickness of the weakened zone is less than a thickness of another region of the isolating member, and/or a melting point of the weakened zone is less than a melting point of another region of the isolating member.

According to the technical solutions of the implementation manners, the weakened zone on the isolating member is realized by thinning the thickness and/or using a material with a low melting point. The implementation manner is relatively simple, has low manufacturing costs, and could relatively reliably ensure that the weakened zone can fracture when the internal pressure or temperature of the energy storage container reaches a preset threshold, to ensure the safety of the energy storage container.

In some possible implementation manners, the weakened zone includes: an indentation.

In some possible implementation manners, the indentation forms a target pattern, and in a case that the indentation fractures, a region where the target pattern is located is used to form a passage connecting the enclosed space with an internal space of the energy storage container for accommodating the battery.

According to the technical solutions of the implementation manners, the region where the target pattern formed by the indentation may have a certain area, and thus the passage between the enclosed space and the internal space of the energy storage container has a certain radial dimension. The passage can assist in relieving the internal pressure of the energy storage container faster and better, to further improve the safety of the energy storage container.

In some possible implementation manners, the target pattern is a non-closed pattern.

According to the technical solutions of the implementation manners, in a case that the indentation fracturs, a region where the non-closed pattern formed by the indentation is located can not only form a nick, but be still connected to the isolating member. In other words, the region where the non-closed pattern is located does not leave the isolating member and enter the enclosed space or even reach the pressure relief mechanism, thereby it avoids influencing the pressure relief operation of the pressure relief mechanism and further ensures the safety of the energy storage container.

In some possible implementation manners, the weakened zone is provided in a region of the isolating member close to the pressure relief mechanism.

According to the technical solutions of the implementation manners, the weakened zone is provided close to the pressure relief mechanism, which can reduce the distance between the weakened zone and the pressure relief mechanism. When the weakened zone fractures, emissions of the battery in the energy storage container can reach the pressure relief mechanism quickly through the weakened zone, and further be discharged from the energy storage container through the pressure relief mechanism, which prevents the emissions of the battery in the energy storage container from causing damage to other components of the energy storage container, so as to further improve the safety of the energy storage container.

In some possible implementation manners, a plurality of weakened zones are provided on the isolating member.

According to the technical solutions of the implementation manners, when some weakened zone of the plurality of weakened zones cannot fracture due to factors such as processing when the internal pressure or temperature of the energy storage container reaches the threshold, there are still other weakened zones that can fracture to ensure the actuation effect of the isolating member, thereby ensuring the pressure relief performance of the isolating member and the safety of the energy storage container.

In some possible implementation manners, the isolating member includes: an isolating plate, and the isolating member is connected to walls of the energy storage container adjacent to the first wall, so that the enclosed space is formed between the isolating plate and the first wall.

According to the technical solutions of the embodiments of the present application, the isolating member includes the isolating plate, this plate-like structure is easily installed in the energy storage container, and forms the enclosed space easily with the first wall. Therefore, the technical solutions are implemented easily, and could improve the efficiency of manufacturing the energy storage container.

In some possible implementation manners, the energy storage container further includes: a heat preserving member provided in the enclosed space and attached to a region of the first wall other than the pressure relief mechanism.

According to the technical solutions of the embodiments of the present application, on the basis of utilizing the enclosed space to preserve heat for the internal space of the energy storage container, the energy storage container may further include: an heat preserving member, and the heat preserving member is attached to a region of the first wall other than the pressure relief mechanism, which does not affect the pressure relief function of the pressure relief mechanism, but prevents the influence of the temperature change of the external environment on the temperature of the air in the enclosed space, further improving the heat preservation function for the energy storage container.

In some possible implementation manners, the isolating member includes: an isolating plate and a connecting member, the connecting member is attached to a region of the first wall around the pressure relief mechanism, and an edge region of the isolating plate is attached to the connecting member, so that the enclosed space is formed between the isolating plate and the first wall.

According to the technical solutions of the embodiments of the present application, the connecting member and the isolating plate in the isolating member can be flexibly adapted to the pressure relief mechanism for installation. The volume of the enclosed space between the isolating plate and the pressure relief mechanism is small, and the enclosed space does not excessively occupy the internal space of the energy storage container for accommodating the battery, which could increase the space utilization rate in the energy storage container.

In some possible implementation manners, the connecting member is a heat preserving member, and the heat preserving member is attached to a region of the first wall other than the pressure relief mechanism.

According to the technical solutions of the embodiments of the present application, the heat preserving member can be used as the connecting part. The heat preserving member can support and is connected with the isolating plate while realizing the heat preservation function, so as to realize the installation of the isolating plate in the energy storage container.

In some possible implementation manners, a plurality of inflatable structures are provided in the enclosed space, an interior of an inflatable structure is filled with confining gas, and confining gas is filled between the inflatable structure and the enclosed space.

According to the technical solutions of the embodiments, the plurality of inflatable structures are provided in the enclosed space, so that the confining gas in the enclosed space can be more stable, that is, the fluidity of the confining gas becomes weaker, and the heat preservation performance of the enclosed space on the internal space of the energy storage container can be further improved.

In some possible implementation manners, the first wall is located on a top or a side of the energy storage container.

According to the technical solutions of the implementation manners, it is possible to reduce the danger to the human body caused by the emissions of the battery that are relieved through the pressure relief mechanism on the first wall in the energy storage container.

In some possible implementation manners, a plurality of pressure relief mechanisms are provided on the first wall.

According to the technical solutions of the implementation manners, a plurality of pressure relief mechanisms can be flexibly provided on the first wall according to actual needs, so that the internal pressure or temperature of the energy storage container can be quickly relieved from the plurality of pressure relief mechanisms, which further reduces the explosion probability of the energy storage container and improves the safety of the energy storage container.

In a second aspect, a method for producing an energy storage container is provided, including: providing a pressure relief mechanism; installing the pressure relief mechanism on a first wall of the energy storage container; providing an isolating member; and installing the isolating member on a side of the pressure relief mechanism facing an interior of the energy storage container, the interior of the energy storage container being configured to accommodate at least one battery, and an enclosed space being formed between the isolating member and the pressure relief mechanism; where the isolating member is configured to be actuated when an internal pressure or temperature of the energy storage container reaches a threshold, to relieve the internal pressure or temperature to the enclosed space, and the pressure relief mechanism is configured to be actuated when a pressure or temperature of the enclosed space reaches a threshold, to relieve the internal pressure or temperature to an exterior of the energy storage container.

In a third aspect, an apparatus for producing an energy storage container is provided, including: a providing module configured to provide a pressure relief mechanism and an isolating member; an installing module configured to install the pressure relief mechanism on a first wall of the energy storage container, and install the isolating member on a side of the pressure relief mechanism facing an interior of the energy storage container, the interior of the energy storage container being configured to accommodate at least one battery, and an enclosed space being formed between the isolating member and the pressure relief mechanism; where the isolating member is configured to be actuated when an internal pressure or temperature of the energy storage container reaches a threshold, to relieve the internal pressure or temperature to the enclosed space, and the pressure relief mechanism is configured to be actuated when a pressure or temperature of the enclosed space reaches a threshold, to relieve the internal pressure or temperature to an exterior of the energy storage container.

According to the technical solution of the embodiment of the present application, when the internal pressure or temperature of the energy storage container reaches a certain threshold, the isolating member and the pressure relief mechanism can be actuated sequentially, and the internal pressure or temperature of the energy storage container may be relieved to the exterior of the energy storage container through the isolating member and the pressure relief mechanism, to prevent explosion of the energy storage container and ensure safety performance of the energy storage container. On this basis, when the internal pressure or temperature of the energy storage container does not reach a certain threshold, the isolating member and the pressure relief mechanism are not actuated, and the enclosed space between the isolating member and the pressure relief mechanism can preserve heat for an internal space of the energy storage container for accommodating the battery, to ensure performance of the battery stored in the internal space.

### BRIEF DESCRIPTION OF THE DRAWINGS

In order to illustrate the technical solutions in the embodiments of the present application more clearly, brief description will be made below to the accompanying drawings required in the embodiments of the present application. It will be apparent that the accompanying drawings described below are some embodiments of the present application only, and other drawings could be obtained based on these accompanying drawings by those ordinary skilled in this art without creative efforts.
FIG. 1 is a schematic diagram of appearance of an energy storage container disclosed in an embodiment of the present application;
FIG. 2 is a schematic structural diagram of an energy storage container disclosed in an embodiment of the present application;
FIG. 3 is a schematic structural diagram of an indentation on an isolating member disclosed in an embodiment of the present application;
FIG. 4 is a schematic structural diagram of a weakened zone on an isolating member disclosed in an embodiment of the present application;
FIG. 5 is a schematic structural diagram of another energy storage container disclosed in an embodiment of the present application;
FIG. 6 is a schematic structural diagram of another energy storage container disclosed in an embodiment of the present application;
FIG. 7 is a schematic structural diagram of another energy storage container disclosed in an embodiment of the present application;
FIG. 8 is a schematic structural diagram of another energy storage container disclosed in an embodiment of the present application;
FIG. 9 is a schematic structural diagram of another energy storage container disclosed in an embodiment of the present application;
FIG. 10 is a schematic flowchart of a method for producing an energy storage container disclosed in an embodiment of the present application; and
FIG. 11 is a schematic block diagram of an apparatus for producing an energy storage container disclosed in an embodiment of the present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, "a plurality of' means two or more ; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless explicitly specified and defined otherwise, terms "installation", "interconnection" and "connection" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists, both A and B exist, and B exists. In addition, the character "/" in the present application generally indicates that the associated objects before and after the character are in an "or" relationship.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions. The terms such as "first" and "second" in the specification and the claims of the present application as well as the drawings described above are used to distinguish different objects, and shall not be used to indicate a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

An energy storage container is an energy storage apparatus with relatively high integration. Specifically, the energy storage container may contain a battery compartment, and components, such as a plurality of batteries, a main control component, a bus component and a thermal management component, may be arranged in the battery compartment.

A battery can also be referred to as an electric box, which includes a box and one or more battery cells packaged in the box. Optionally, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is also not limited in the embodiments of the present application.

Optionally, the plurality of batteries arranged in the battery compartment may be in series connection, parallel connection or series-parallel connection. In some implementation manners, the plurality of batteries can be connected to the main control component through the bus component, and the electrical connection between the plurality of batteries can be realized through the main control component.

In addition to the plurality of batteries, the main control component and the bus component, the energy storage container further includes: a thermal management component. The thermal management component includes but is not limited to an air-conditioning component, a fan component, a water-cooling pipe, or the like, which can be used to perform thermal management on an interior of the energy storage container, to regulate the internal temperature of the energy storage container.

For the box of the battery, in order to prevent the influence of the external environment on the battery cell accommodated in the box, the box of the battery has a certain degree of sealing. For the battery cell in the battery, during the operation of the battery cell, an internal pressure or temperature of the battery cell changes due to a chemical reaction in the battery cell. In order to ensure the safety of the whole battery, the box of the battery and the battery cell are provided with pressure relief mechanisms.

The pressure relief mechanism on the battery cell refers to an element or component that is actuated when the internal pressure or temperature of the battery cell reaches a predetermined threshold, to relieve the internal pressure or temperature. When the pressure relief mechanism on the battery cell is actuated, high-temperature and high-pressure substances in the interior of the battery cell are relieved to the box through the pressure relief mechanism on the battery cell. Further, when an internal pressure or temperature of the box reaches a preset threshold, the pressure relief mechanism on the box can also be actuated, and the high-temperature and high-pressure substances from the interior of the battery cell are relieved to the battery compartment through the pressure relief mechanism on the box.

According to the above implementation manner, although the safety performance of the battery can be guaranteed to a certain extent, when the pressure relief mechanism on the box of the battery is actuated, the high-temperature and high-pressure substances from the interior of the battery cell enter the battery compartment in the energy storage container, which introduces a potential safety hazard to the battery compartment.

In addition, for the battery cell, its performance is closely related to the ambient temperature of the battery cell. For example, if the ambient temperature is too high, the risk of failure and explosion of the battery cell will increase; or if the ambient temperature is too low, an electrochemical reaction in the battery cell will be affected, and the normal operation and service life of the battery cell will be affected. Therefore, the energy storage container for storing battery cells needs to have good heat preservation performance to reduce the influence of a change of the external environment on the battery cells and ensure the performance of the battery cells.

In view of this, the present application provides an energy storage container, on a first wall of which a pressure relief mechanism is provided. Moreover, a side of the pressure relief mechanism facing an interior of the energy storage container is provided with an isolating member, and an enclosed space is formed between the isolating member and the pressure relief mechanism. When an internal pressure or temperature of the energy storage container reaches a threshold, the isolating member can be actuated to relieve the internal pressure or temperature of the energy storage container to the enclosed space. Further, when a pressure or temperature of the enclosed space reaches a threshold, the pressure relief mechanism on the first wall of the energy storage container can be actuated to relieve the internal pressure or temperature of the energy storage container to an exterior of the energy storage container. According to the technical solution, when the internal pressure or temperature of the energy storage container reaches a certain threshold, the isolating member and the pressure relief mechanism on the energy storage container can be actuated sequentially, and the internal pressure or temperature of the energy storage container can be relieved to the exterior of the energy storage container through the isolating member and the pressure relief mechanism, to prevent explosion of the energy storage container and ensure safety performance of the energy storage container. On this basis, when the internal pressure or temperature of the energy storage container does not reach a certain threshold, the isolating member and the pressure relief mechanism are not actuated, and the enclosed space between the isolating member and the pressure relief mechanism can preserve heat for an internal space of the energy storage container, to ensure performance of a battery stored in the internal space.

The technical solutions described in the embodiments of the present application are applicable to various types and sizes of energy storage containers. For example, the energy storage container may be a 40-foot or 20-foot standard container, or a specific container with custom dimensions. The battery accommodated in the energy storage container includes but is not limited to: a lithium battery, such as: a lithium iron phosphate battery, a lithium manganese oxide battery or a lithium cobalt oxide battery.

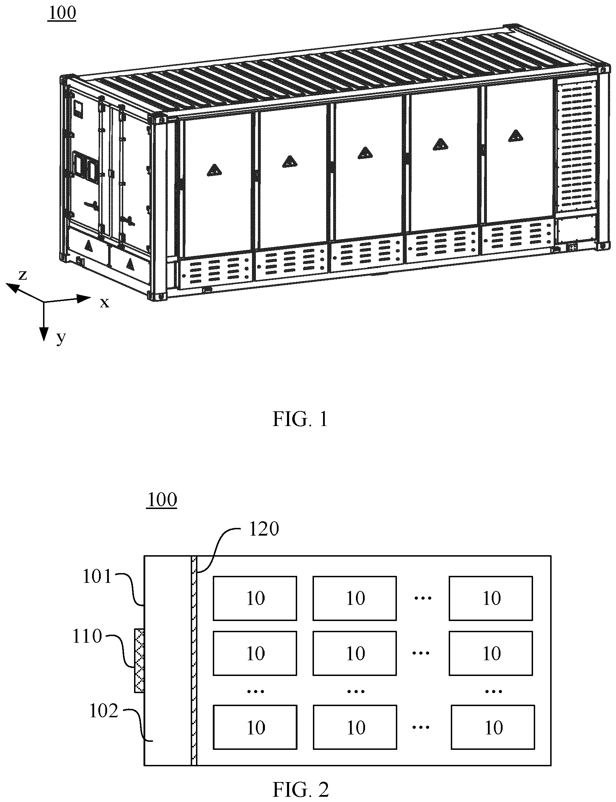

FIG. 1 shows a schematic diagram of appearance of an energy storage container 100 provided in an embodiment of the present application.

As shown in FIG. 1, the energy storage container 100 may be a regular cuboid structure, which facilitates fixed placement and transport of the energy storage container 100. An interior of the energy storage container 100 is a hollow structure, and the hollow structure may include a battery compartment, so as to provide a plurality of batteries in the battery compartment. Furthermore, in addition to the battery compartment, the interior of the energy storage container 100 may be divided into a plurality of functional compartments according to actual needs, and each functional compartment is provided with other functional device components for managing the plurality of batteries or performing auxiliary operations on the plurality of batteries, such as a bus component, a main control component, a thermal management component.

With continue reference to FIG. 1, in the embodiment of the present application, three directions are defined based on the cuboid energy storage container 100, where six faces of the cuboid are six outer walls of the energy storage container 100. Specifically, as shown in FIG. 1, a first direction x may be a length direction of the energy storage container 100, and two walls of the six outer walls of the energy storage container 100 that are perpendicular to the first direction x are sequentially referred to as a front wall and a rear wall; a second direction y may be a height direction of the energy storage container 100, and two walls of the six outer walls of the energy storage container 100 that are perpendicular to the second direction y are sequentially referred to as a top wall and a bottom wall; and a third direction z may be a width direction of the energy storage container 100, and two walls of the six outer walls of the energy storage container 100 that are perpendicular to the third direction z are sequentially referred to as a right wall and a left wall.

In the six outer walls of the energy storage container 100, the top wall and the bottom wall perpendicular to the second direction y may face an opposite direction of gravity and a direction of gravity, respectively. Therefore, in addition to the top wall and the bottom wall that are inconvenient to be provided with a door of the energy storage container 100, any one or more of the front wall, the rear wall, the left wall or the right wall of the energy storage container 100 can be provided with a door of the energy storage container 100, so as to facilitate the user to enter the energy storage container 100 and manage the components therein.

FIG. 2 shows a schematic structural diagram of an energy storage container 100 illustrated by another embodiment of the present application.

As shown in FIG. 2, in the embodiment of the present application, the energy storage container 100 includes: a pressure relief mechanism 110 and an isolating member 120. Specifically, the pressure relief mechanism 110 is provided on a first wall 101 of the energy storage container 100, the isolating member 120 is provided on a side of the pressure relief mechanism 110 facing an interior of the energy storage container 100, the interior of the energy storage container 100 is configured to accommodate at least one battery 10, and an enclosed space 102 is formed between the isolating member 120 and the pressure relief mechanism 110. The isolating member 120 is configured to be actuated when an internal pressure or temperature of the energy storage container 100 reaches a threshold, to relieve the internal pressure or temperature to the enclosed space 102, and the pressure relief mechanism 110 is configured to be actuated when a pressure or temperature of the enclosed space 102 reaches a threshold, to relieve the internal pressure or temperature of the energy storage container 100 to an exterior of the energy storage container 100.

Specifically, in the embodiment of the present application, the first wall 101 of the energy storage container 100 may be any outer wall of the above cuboid energy storage container 100 shown in FIG. 1 other than the bottom wall.

Optionally, the pressure relief mechanism 110 on the first wall 101 may be a pressure-sensitive component or a temperature-sensitive component. The pressure relief mechanism 110 has a preset actuation pressure threshold or actuation temperature threshold. For example, in a case that the pressure relief mechanism 110 is a pressure-sensitive component, the pressure relief mechanism 110 can be an explosion-proof pressure relief component, such as an explosion-proof valve, an explosion-proof plate, or an explosion-proof sheet.

When the battery 10 accommodated in the energy storage container 100 relieves high-temperature and high-pressure emissions from the interior of the battery 10 through a pressure relief mechanism on the battery 10, the pressure or temperature of an internal space of the energy storage container 100 for accommodating the battery 10 rises accordingly. When the pressure or temperature of the internal space of the energy storage container 100 reaches the preset actuation threshold, the pressure relief mechanism 110 is actuated, so that the pressure relief mechanism 110 is in an open state, which realizes communication between the internal and external spaces of the energy storage container 100. Therefore, high-temperature and high-pressure substances in the interior of the energy storage container 100 are quickly discharged to the exterior of the energy storage container 100, which prevents the explosion of the energy storage container 100 and ensures the safety performance of the energy storage container 100.

When the pressure or temperature of the internal space of the energy storage container 100 does not reach the preset actuation threshold, the pressure relief mechanism 110 is in a closed state, which can prevent external substances such as moisture from entering the energy storage container 100, ensure reliability of the operation of electrical components in the energy storage container 100, and further ensure the safety performance of the energy storage container 100.

Optionally, parameters of the pressure relief mechanism 110, such as an actuation threshold and an area, can be designed according to actual needs. For example, they can be designed according to various factors, such as the number and type of batteries 10 in the energy storage container 100, the size of the internal space of the energy storage container 100, and relevant requirements of fire protection regulations, and the relevant parameters of the pressure relief mechanism 110 are not specifically limited in the embodiments of the present application.

With continue reference to FIG. 2, in the embodiment of the present application, a side of the pressure relief mechanism 110 facing the interior of the energy storage container 100 is provided with the isolating member 120. When the pressure relief mechanism 110 is not actuated, the enclosed space 102 is formed between the isolating member 120 and the pressure relief mechanism 110, and the enclosed space 102 accommodates confining air. The confining air does not flow, and the heat conductivity coefficient of the air is very low. Therefore, the enclosed space 102 can preserve heat for the battery 10 accommodated in the interior of the energy storage container 100 to ensure the performance of the battery 10.

In addition to forming the enclosed space 102 with the isolating member 120 to preserve heat for the internal space of the energy storage container 100 for accommodating the battery 10, the isolating member 120 can be actuated when the internal pressure or temperature of the energy storage container 100 reaches the threshold, to relieve the internal pressure or temperature to the enclosed space 102, then, the pressure relief mechanism 110 is actuated when the pressure or temperature of the enclosed space 102 reaches the threshold, and the internal pressure or temperature of the energy storage container 100 can be relieved to the exterior of the energy storage container 100 through the enclosed space 102 and the pressure relief mechanism 110.

It should be noted that, when the internal pressure or temperature of the energy storage container 100 reaches the threshold, the isolating member 120 is actuated to form a passage communicating the enclosed space 102 with the internal space of the energy storage container 100 for accommodating the battery 10. Meanwhile, the enclosed space 102 and the internal space of the energy storage container 100 form a communication space, and the pressure or temperature of the enclosed space 102 is equal to the pressure or temperature of the communication space. When the pressure or temperature of the communication space where the enclosed space is located reaches the threshold, the pressure relief mechanism 110 is actuated, and the internal pressure or temperature of the energy storage container 100 can be relieved to the exterior of the energy storage container 100.

According to the technical solutions of the embodiments of the present application, when the internal pressure or temperature of the energy storage container 100 reaches a certain threshold, the isolating member 120 and the pressure relief mechanism 110 can be actuated sequentially, and the internal pressure or temperature of the energy storage container 100 may be relieved to the exterior of the energy storage container 100 through the isolating member 120 and the pressure relief mechanism 110 to prevent explosion of the energy storage container 100 and ensure the safety performance of the energy storage container 100. On this basis, when the internal pressure or temperature of the energy storage container 100 does not reach a certain threshold, the isolating member 120 and the pressure relief mechanism 110 are not actuated, and the enclosed space 102 between the isolating member 120 and the pressure relief mechanism 110 can preserve heat for the internal space of the energy storage container 100 for accommodating the battery 10, to ensure performance of the battery 10 stored in the internal space.

Optionally, in some implementation manners, the isolating member 120 is provided with a weakened zone 121, and the weakened zone 121 is capable of fracturing when the internal pressure or temperature of the energy storage container 110 reaches the threshold, to relieve the internal pressure or temperature of the energy storage container 100 to the enclosed space 102.

According to the technical solutions of the implementation manners, the isolating member 120 is provided with a weakened zone 121 to realize the purpose of actuating the isolating member 120 when the internal pressure or temperature of the energy storage container 100 reaches the threshold. The implementation manners are simple and have low manufacturing costs.

Optionally, a thickness of the weakened zone 121 is less than a thickness of another region of the isolating member 120, and/or a melting point of the weakened zone 121 is less than a melting point of another region of the isolating member 120.

In some implementation manners, the material of the weakened zone 121 is different from the material of another region of the isolating member 120. For example: the material of the weakened zone 121 is a non-metallic material, and the material of another region of the isolating member 120 is a metal material, so that the melting point of the weakened zone 121 is lower than the melting point of another region of the isolating member 120. When the internal temperature of the energy storage container 100 reaches the melting point of the weakened zone 121, the weakened zone 121 can melt and fracture.

Optionally, in a case that the material of the weakened zone 121 is different from the material of another region of the isolating member 120, the strength of the material of the weakened zone 121 may also be smaller than the strength of the material of the isolating member 120. When the internal pressure of the energy storage container 100 reaches a preset threshold, the weakened zone 121 can fracture under pressure.

As an example, but not a limitation, the material of the weakened zone 121 is plastic, and the material of another region of the isolating member 120 is stainless steel.

In some other implementation manners, the material of the weakened zone 121 may be the same as the material of the isolating member 120. For example, the materials of the weakened zone 121 and the isolating member 120 are both stainless steel.

In a case that the material of the weakened zone 121 is the same as the material of the isolating member 120, the thickness of the weakened zone 121 can be less than the thickness of another region of the isolating member 120, so that the weakened zone 121 fractures more easily than another region of the isolating member 120 under the influence of temperature or pressure.

Certainly, in a case that the material of the weakened zone 121 is different from the material of the isolating member 120, the thickness of the weakened zone 121 can also be less than the thickness of another region of the isolating member 120, so as to further ensure that the weakened zone 121 can fracture when the internal pressure or temperature of the energy storage container 100 reaches the preset threshold.

According to the technical solutions of the implementation manners, the weakened zone 121 on the isolating member 120 is realized by thinning the thickness and/or using a material with a low melting point. The implementation manners are relatively simple, have low manufacturing costs, and could relatively reliably ensure that the weakened zone 121 can fracture when the internal pressure or temperature of the energy storage container 100 reaches a preset threshold, to ensure the safety of the energy storage container 100.

Optionally, the weakened zone 121 may have various structural implementation manners. For example, the weakened zone 121 may include an indentation 1211.

In some implementation manners, the indentation 1211 can form a target pattern, and in a case that the indentation 1211 fractures, a region 1212 where the target pattern is located is used to form a passage connecting the enclosed space 102 with the internal space of the energy storage container 100 for accommodating the battery 10.

In these implementation manners, the indentation 1211 can enclose to form a closed pattern. In a case that the indentation 1211 fractures, the region 1212 where the closed pattern is located forms a nick, and the nick forms the passage connecting the enclosed space 102 with the internal space of the energy storage container 100 for accommodating the battery 10 and is used to relieve the internal pressure or temperature of the energy storage container 100.

Optionally, the closed pattern formed by the enclosing of the indentation 1211 may be a regular closed pattern, such as a polygon, a circle; or the closed pattern may be an irregular closed pattern, and the specific shape of the closed pattern is not limited in the embodiments of the present application.

According to the technical solutions of the implementation manners, the region 1212 where the target pattern formed by the indentation 1211 may have a certain area, and thus the passage between the enclosed space 102 and the internal space of the energy storage container 100 for accommodating the battery 10 has a certain radial dimension. The passage can play a role of relieving the internal pressure of the energy storage container 100 faster and better, to further improve the safety of the energy storage container 100.

Optionally, the indentation 1211 may form a non-closed pattern, that is, the non-closed pattern is the above target pattern.

According to the technical solution of the implementation manner, in a case that the indentation 1211 fractures, the region 1212 where the non-closed pattern formed by the indentation 1211 is located can not only form a nick, but be still connected to the isolating member 120. In other words, the region 1212 where the non-closed pattern is located does not leave the isolating member 120 and enter the enclosed space 102 or even reach the pressure relief mechanism 110, thereby avoiding the influence on the pressure relief of the pressure relief mechanism 110 and further ensuring the safety of the energy storage container 100.

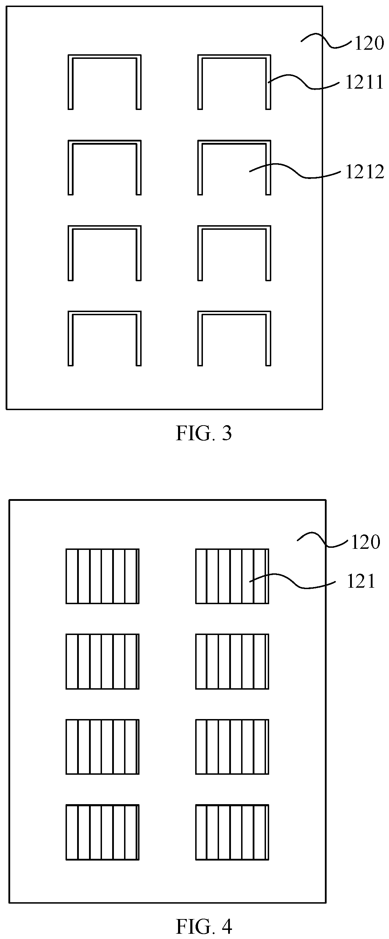

FIG. 3 shows a schematic structural diagram of an indentation 1211 on an isolating member 120 provided in an embodiment of the present application.

As shown in FIG. 3, a target pattern formed by three straight indentations 1211 is formed on the isolating member 120. The three straight indentations 1211 are connected to each other to form three sides of a quadrilateral. When the internal pressure of the energy storage container 100 reaches a preset threshold, the three indentations 1211 fracture, a region 1212 formed by the three straight indentations 1211 is used to form a passage for connecting the enclosed space 102 and the internal space of the energy storage container 100, and the internal pressure of the energy storage container 100 is relieved to the enclosed space 102 through the passage.

It can be understood that FIG. 3 is only for illustration rather than limitation, and shows one setting manner of the indentation 1211 provided in the embodiment of the present application. In addition to the shape shown in FIG. 3, the straight indentations 1211 may form a non-closed pattern in another shape, and the indentation 1211 can be curved in addition to being straight. In addition, there may be one or more nicks in the non-closed pattern formed by the indentations 1211, and the specific shape of the non-closed pattern and the number of nicks are not limited in the embodiments of the present application.

In the technical solution of the embodiment shown in FIG. 3, the implementation manner of the three straight indentations 1211 is simple, and the region 1212 formed has a relatively large area, which can ensure the pressure relief effect to a certain extent.

Optionally, in some implementation manners, a plurality of weakened zones 121 are provided on the isolating member 120.

According to the technical solutions of the implementation manners, when some weakened zone 121 of the plurality of weakened zones 121 cannot fracture due to factors such as processing when the internal pressure or temperature of the energy storage container 100 reaches the threshold, there are still other weakened zones 121 that can fracture to ensure the actuation effect of the isolating member 120, thereby ensuring the pressure relief performance of the isolating member 120 and the safety of the energy storage container 100.

For example, with further reference to FIG. 3, a plurality of indentations 1211 are formed on the isolating member 120, and correspondingly, target patterns formed by the plurality of indentations 1211 and regions 1212 where the plurality of target patterns are located are formed on the isolating member 120.

Alternatively, FIG. 4 shows a schematic structural diagram of a weakened zone 121 on an isolating member 120 provided in another embodiment of the present application.

As shown in FIG. 4, the weakened zone 121 is a local block-shaped region on the isolating member 120. The material of the weakened zone 121 is different from the material of the isolating member 120. For example, the material of the weakened zone 121 is plastic, the material of the isolating member 120 is metal, and the melting point of the plastic is lower than that of the metal. When the temperature of the internal space of the energy storage container 100 for accommodating the battery 10 is greater than a preset temperature threshold, the plastic of the weakened zone 121 melts, and the internal pressure or temperature of the energy storage container 100 can be relieved through the weakened zone 121.

As an example, in the implementation manners shown in FIG. 3 and FIG. 4, a plurality of weakened zones 121 are uniformly arranged in the isolating member 120. Optionally, in other implementation manners, the plurality of weakened zones 121 can be arranged in other manners in the isolating member 120 according to actual needs, and the arrangement and the number of the plurality of weakened zones 121 are not specifically limited in the embodiments of the present application.

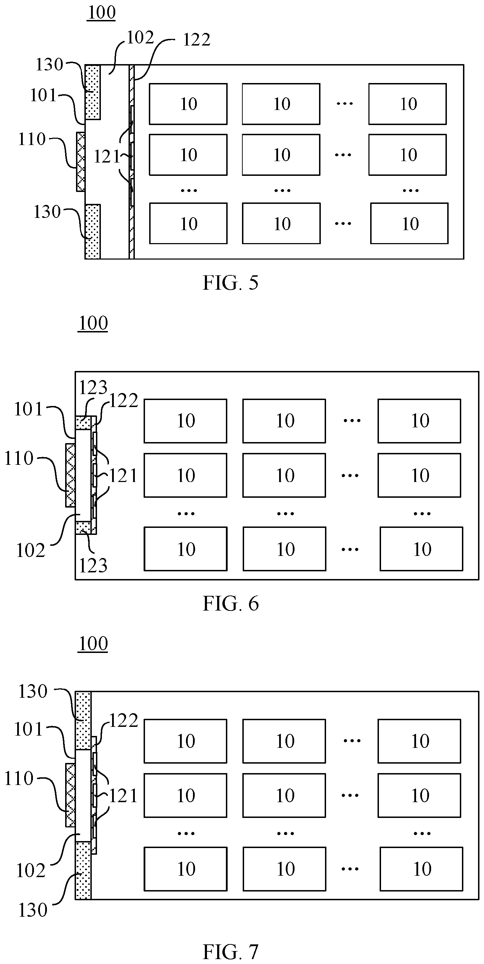

FIG. 5 shows a schematic structural diagram of an energy storage container 100 illustrated by another embodiment of the present application.

As shown in FIG. 5, the weakened zone 121 can be provided in a region of the isolating member 120 close to the pressure relief mechanism 110. Optionally, in the embodiment shown in FIG. 5, a plurality of weakened zones 121 can be provided.

According to the technical solution of the implementation manner, the weakened zone 121 is provided close to the pressure relief mechanism 110, which can reduce the distance between the weakened zone 121 and the pressure relief mechanism 110. When the weakened zone 121 fractures, emissions of the battery 10 in the energy storage container 100 can reach the pressure relief mechanism 110 quickly through the weakened zone 121, and further be discharged from the energy storage container 100 through the pressure relief mechanism 110, which prevents the emissions of the battery 10 in the energy storage container 100 from causing damage to other components of the energy storage container 100, so as to further improve the safety of the energy storage container 100.

With continue reference to FIG. 5, optionally, in the embodiment of the present application, the isolating member 120 includes: an isolating plate 122, the isolating plate 122 is connected to walls of the energy storage container 100 adjacent to the first wall 101, so that the enclosed space 102 is formed between the isolating member 120 and the first wall 101.

Specifically, in the embodiment shown in FIG. 5, the weakened zone 121 is provided on the isolating plate 122, and both of them together form the isolating member 120.

Optionally, the isolating plate 122 can be a metal plate, and the metal plate includes but is not limited to a stainless steel plate, which has great strength and rigidity and good corrosion resistance.

Optionally, the isolating plate 122 is connected to four walls of the energy storage container 100 adjacent to the first wall 101 to realize the installation of the isolating plate 122 in the energy storage container 100. The isolating plate 122, as an inner wall of the energy storage container 100, can divide the space of the energy storage container 100 to form the enclosed space 102 and the inner space accommodating the battery 10.

According to the technical solution of the embodiment, the isolating member 120 includes the isolating plate 122, this plate-like structure is easily installed in the energy storage container 100, and forms the enclosed space 102 easily with the first wall 101. Therefore, the technical solution is implemented easily, and could improve the efficiency of manufacturing the energy storage container 100.

Optionally, with continue reference to FIG. 5, in the embodiment of the present application, the energy storage container 100 may further include: a heat preserving member 130 provided in the enclosed space 102 and attached to a region of the first wall 101 other than the pressure relief mechanism 110.

Optionally, the heat preserving member 130 includes but is not limited to rock wool, which is light and has better heat preservation performance, and can be easily installed in the energy storage container 100.

According to the technical solution of the embodiment of the present application, on the basis of utilizing the enclosed space 102 to preserve heat for the internal space of the energy storage container 100, the energy storage container 100 may further include: an heat preserving member 130, and the heat preserving member 130 is attached to a region of the first wall 101 other than the pressure relief mechanism 110, which does not affect the pressure relief function of the pressure relief mechanism 110, but prevents the influence of the temperature change of the external environment on the temperature of the air in the enclosed space 102, further improving the heat preservation function for the energy storage container 100.

FIG. 6 shows a schematic structural diagram of an energy storage container 100 illustrated by another embodiment of the present application.

As shown in FIG. 6, in the embodiment of the present application, the isolating member 120 includes: an isolating plate 122 and a connecting member 123, the connecting member 123 is attached to a region of the first wall 101 around the pressure relief mechanism 110, and an edge region of the isolating plate 122 is attached to the connecting member 123, so that the enclosed space 102 is formed between the isolating plate 122 and the first wall 101.

Specifically, in the embodiment of the present application, the connecting member 123 is configured to fix the isolating plate 122 to a position corresponding to the pressure relief mechanism 110. The connecting member 123 and the isolating plate 122 can be two separate structures, but the fixed installation of the two can be realized through installation and cooperation. Alternatively, the connecting member 123 and the isolating plate 122 can be an integrated structure. In this case, the connecting member 123 and the isolating plate 122 can be regarded as a hollow structure with one side opening, and the internal space of the hollow structure is the enclosed space 102 between the isolating plate 122 and the pressure relief mechanisms 110.

According to the technical solution of the embodiment of the present application, the connecting member 123 and the isolating plate 122 in the isolating member 120 can be flexibly adapted to the pressure relief mechanism 110 for installation. The volume of the enclosed space 102 between the isolating plate 122 and the pressure relief mechanism 110 is small, and the enclosed space 102 does not excessively occupy the internal space of the energy storage container 100 for accommodating the battery 10, which could improve the space utilization rate in the energy storage container 100.

On the basis of the embodiment shown in FIG. 6, FIG. 7 shows a schematic structural diagram of an energy storage container 100 illustrated by another embodiment of the present application.

As shown in FIG. 7, in the embodiment of the present application, the connecting member 123 is a heat preserving member 130, and the heat preserving member 130 is attached to a region of the first wall 101 other than the pressure relief mechanism 110.

Specifically, in the embodiment of the present application, the heat preserving member 130 can be used as the connecting member 123. The heat preserving member 130 can support and is connected with the isolating plate 122 while realizing the heat preservation function, so as to realize the installation of the isolating plate 122 in the energy storage container 100.

It should be noted that, when the heat preserving member 130 is rock wool, a rigid structural member can be wrapped around the rock wool to seal and protect the rock wool and prevent substances such as moisture from affecting the heat preservation effect of the rock wool. The isolating member 122 can be attached to the rigid structural member outside the rock wool to realize the installation of the isolating member 122 in the energy storage container 100.

As shown in FIG. 7, when the connecting member 123 is the heat preserving member 130, the heat preserving member 130 is attached not only to a region of the first wall 101 around the pressure relief mechanism 110, but to all other regions in the first wall 101 other than the pressure relief mechanism 110 to maximize the improvement of the heat preservation function of the heat preserving member 130.

Optionally, in the above embodiments shown in FIG. 5 to FIG. 7, the isolating plate 122 is parallel to the first wall 101, and the distance between the isolating plate 122 and the first wall 101 can be greater than or equal to the thickness of the heat preserving member 130. As an example but not a limitation, the distance between the isolating plate 122 and the first wall 101 can be greater than or equal to 50mm, so that there is a sufficient width between the isolating plate 122 and the first wall 101, the heat exchange between two sides of the enclosed space 102 is reduced, and the heat preservation performance of the enclosed space 102 on the inner space of the energy storage container 100 is improved.

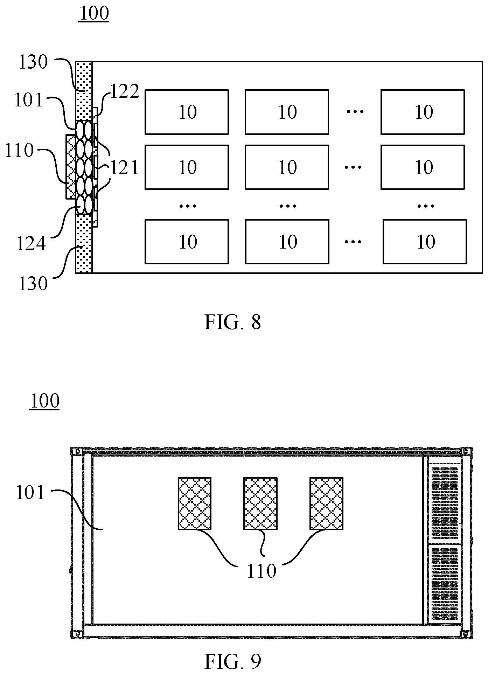

FIG. 8 shows a schematic structural diagram of an energy storage container 100 illustrated by another embodiment of the present application.

As shown in FIG. 8, in the embodiment of the present application, a plurality of inflatable structures 124 are provided in the enclosed space 102, an interior of an inflatable structure 124 is filled with confining gas, and confining gas is filled between the inflatable structure 124 and the enclosed space 102.

According to the technical solution of the embodiment, the plurality of inflatable structures 124 are provided in the enclosed space 102, so that the confining gas in the enclosed space 102 can be more stable, that is, the fluidity of the confining gas becomes weaker, and the heat preservation performance of the enclosed space 102 on the internal space of the energy storage container 100 can be further improved.

Optionally, in some implementation manners, the first wall 101 of the energy storage container 100 is located on a top or a side of the energy storage container 100.

Specifically, the first wall 101 is not a wall of the energy storage container 100 that is provided with a door. When the pressure relief mechanism 110 on the first wall 101 relieves the internal pressure or temperature of the energy storage container 100, emissions relieved through the pressure relief mechanism 110 are of high temperature and pressure, and thus may be dangerous. Therefore, the first wall 101 may be a wall away from the box of the energy storage container 100. In some implementation scenarios, for example, as shown in FIG. 1, when the door of the energy storage container 100 is provided on the front wall, the first wall 101 can be another wall other than the front wall, such as the top wall, the rear wall, the left wall or the right wall. In this case, the first wall 101 can also be understood as being located on the top or side of the energy storage container.

According to the technical solution of the implementation manner, it is possible to reduce the danger to the human body caused by the emissions of the battery that are relieved through the pressure relief mechanism 110 on the first wall 101 in the energy storage container 100.

In the above embodiments of the application, the number of pressure relief mechanisms 110 on the first wall 101 of the energy storage container 100 is one; and in other embodiments of the application, there may be a plurality of pressure relief mechanisms 110 on the first wall 101.

FIG. 9 shows a schematic structural diagram of an energy storage container 100 illustrated by another embodiment of the present application.

As shown in FIG. 9, the first wall 101 of the energy storage container 100 may be a wall of the energy storage container 100 that has a larger area. For example, the first wall 101 can be the left wall or the right wall shown in FIG. 1. The area of the first wall 101 is relatively large, and the internal space of the energy storage container 100 for accommodating the battery 10 is also relatively large. Therefore, in order to ensure the relief effect of the internal pressure or temperature of the energy storage container 100, a plurality of pressure relief mechanisms 110 can be dispersedly provided on the first wall 101, and sides of the plurality of pressure relief mechanisms 110 facing the interior of the energy storage container 100 are respectively provided with isolating members 120 correspondingly.

According to the technical solution of the implementation manner, a plurality of pressure relief mechanisms 110 can be flexibly provided on the first wall 101 according to actual needs, so that the internal pressure or temperature of the energy storage container 110 can be quickly relieved from the plurality of pressure relief mechanisms 110, which further reduces the explosion probability of the energy storage container 100 and improves the safety of the energy storage container 100.

It can be understood that, the above embodiments of the application only illustrate the relevant technical solutions in which the pressure relief mechanism 110 is provided on the first wall 101 of the energy storage container 100 and the isolating member 120 corresponding to the pressure relief mechanism 110 is provided. Optionally, the energy storage container 100 can also be provided with pressure relief mechanisms on multiple walls, and isolating members are correspondingly provided. In this implementation manner, reference can be made to the relevant description of the above embodiments for the specific implementation solutions, which will not be repeated redundantly herein.

The energy storage container 100 according to the embodiments of the present application is described above, a method and an apparatus for producing an energy storage container 100 according to the embodiments of the present application will be described below, and reference can be made to the foregoing various embodiments for the parts that are not described in detail.

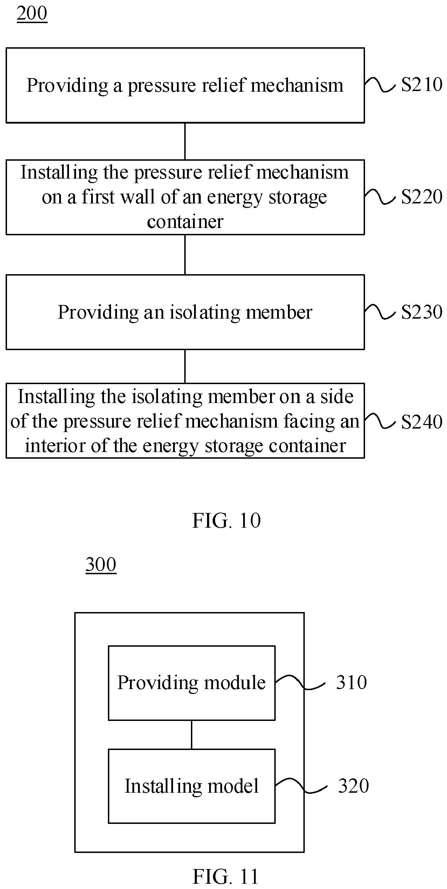

FIG. 10 shows a schematic flowchart of a method 200 for producing an energy storage container in an embodiment of the present application. As shown in FIG. 10, the method 200 may include the following steps.

S210: a pressure relief mechanism 110 is provided.

S220: the pressure relief mechanism 110 is installed on a first wall 101 of an energy storage container 100.

S230: an isolating member 120 is provided.

S240: the isolating member 120 is installed on a side of the pressure relief mechanism 110 facing an interior of the energy storage container 100.

Specifically, the interior of the energy storage container 100 is configured to accommodate at least one battery 10, an enclosed space 102 is formed between the isolating member 120 and the pressure relief mechanism 110, the isolating member 120 is configured to be actuated when an internal pressure or temperature of the energy storage container 100 reaches a threshold, to relieve the internal pressure or temperature to the enclosed space 102, and the pressure relief mechanism 110 is configured to be actuated when a pressure or temperature of the enclosed space 102 reaches a threshold, to relieve the internal pressure or temperature to an exterior of the energy storage container 100.

FIG. 11 shows a schematic block diagram of an apparatus 300 for producing an energy storage container in an embodiment of the present application. As shown in FIG. 11, the apparatus 300 for producing an energy storage container may include: a providing module 310 and an installing module 320.

The providing module 310 is configured to provide a pressure relief mechanism 110 and an isolating member 120; and

The installing module 320 is configured to install the pressure relief mechanism 110 on a first wall 101 of an energy storage container 100, and install the isolating member 120 on a side of the pressure relief mechanism 110 facing an interior of the energy storage container 100.

Specifically, the interior of the energy storage container 100 is configured to accommodate at least one battery 10, an enclosed space 102 is formed between the isolating member 120 and the pressure relief mechanism 110, the isolating member 120 is configured to be actuated when an internal pressure or temperature of the energy storage container 100 reaches a threshold, to relieve the internal pressure or temperature to the enclosed space 102, and the pressure relief mechanism 110 is configured to be actuated when a pressure or temperature of the enclosed space 102 reaches a threshold, to relieve the internal pressure or temperature to an exterior of the energy storage container 100.

Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. An energy storage container (100), comprising:
a pressure relief mechanism (110) provided on a first wall (101) of the energy storage container (100); and
an isolating member (120) provided on a side of the pressure relief mechanism (110) facing an interior of the energy storage container (100), the interior of the energy storage container (100) being configured to accommodate at least one battery (10), and an enclosed space (102) being formed between the isolating member (120) and the pressure relief mechanism (110);
wherein the isolating member (120) is configured to be actuated when an internal pressure or temperature of the energy storage container (100) reaches a threshold, to relieve the internal pressure or temperature to the enclosed space (102), and the pressure relief mechanism (110) is configured to be actuated when a pressure or temperature of the enclosed space (102) reaches a threshold, to relieve the internal pressure or temperature to an exterior of the energy storage container (100).

2. The energy storage container (100) according to claim 1, wherein the isolating member (120) is provided with a weakened zone (121), and the weakened zone (121) is capable of fracturing when the internal pressure or temperature of the energy storage container (100) reaches the threshold, to relieve the internal pressure or temperature to the enclosed space (102).

3. The energy storage container (100) according to claim 2, wherein a thickness of the weakened zone (121) is less than a thickness of other region of the isolating member (120), and/or
a melting point of the weakened zone (121) is less than a melting point of other region of the isolating member (120).

4. The energy storage container (100) according to claim 2 or 3, wherein the weakened zone (121) comprises: an indentation (1211).

5. The energy storage container (100) according to claim 4, wherein the indentation (1211) forms a target pattern, and in a case that the indentation (1211) fractures, a region where the target pattern is located is used to form a passage connecting the enclosed space (102) with an internal space of the energy storage container (100) for accommodating the battery (10).

6. The energy storage container (100) according to claim 5, wherein the target pattern is a non-closed pattern.

7. The energy storage container (100) according to any one of claims 2 to 6, wherein the weakened zone (121) is provided in a region of the isolating member (120) close to the pressure relief mechanism (110).

8. The energy storage container (100) according to any one of claims 2 or 7, wherein a plurality of weakened zones (121) are provided on the isolating member (120).

9. The energy storage container (100) according to any one of claims 1 to 8, wherein the isolating member (120) comprises: an isolating plate (122), and the isolating plate (122) is connected to walls of the energy storage container (100) adjacent to the first wall (101), so that the enclosed space (102) is formed between the isolating member (120) and the first wall (101).

10. The energy storage container (100) according to claim 9, wherein the energy storage container (100) further comprises: a heat preserving member (130) provided in the enclosed space (102) and attached to a region of the first wall (101) other than the pressure relief mechanism (110).

11. The energy storage container (100) according to any one of claims 1 to 8, wherein the isolating member (120) comprises: an isolating plate (122) and a connecting member (123), the connecting member (123) is attached to a region of the first wall (101) around the pressure relief mechanism (110), and an edge region of the isolating plate (122) is attached to the connecting member (123), so that the enclosed space (102) is formed between the isolating plate (122) and the first wall (101).

12. The energy storage container (100) according to claim 11, wherein the connecting member (123) is a heat preserving member (130), and the heat preserving member (130) is attached to a region of the first wall (101) other than the pressure relief mechanism (110).

13. The energy storage container (100) according to any one of claims 1 to 12, wherein a plurality of inflatable structures (124) are provided in the enclosed space (102), an interior of an inflatable structure (124) is filled with a confining gas, and a confining gas is filled between the inflatable structure (124) and the enclosed space (102).

14. The energy storage container (100) according to any one of claims 1 or 13, wherein the first wall (101) is located on a top or a side of the energy storage container (100).

15. The energy storage container (100) according to any one of claims 1 or 14, wherein a plurality of pressure relief mechanisms (110) are provided on the first wall (101).

16. A method (200) for producing an energy storage container, comprising:
providing (S210) a pressure relief mechanism (110);
installing (S220) the pressure relief mechanism (110) on a first wall (101) of the energy storage container (100);
providing (S230) an isolating member (120); and
installing (S240) the isolating member (120) on a side of the pressure relief mechanism (110) facing an interior of the energy storage container (100), the interior of the energy storage container (100) being configured to accommodate at least one battery (10), and an enclosed space (102) being formed between the isolating member (120) and the pressure relief mechanism (110);
wherein the isolating member (120) is configured to be actuated when an internal pressure or temperature of the energy storage container (100) reaches a threshold, to relieve the internal pressure or temperature to the enclosed space (102), and the pressure relief mechanism (110) is configured to be actuated when a pressure or temperature of the enclosed space (102) reaches a threshold, to relieve the internal pressure or temperature to an exterior of the energy storage container (100).

17. An apparatus (300) for producing an energy storage container, comprising:
a providing module (310) configured to provide a pressure relief mechanism (110) and an isolating member (120);
an installing module (320) configured to install the pressure relief mechanism (110) on a first wall (101) of the energy storage container (110), and install the isolating member (120) on a side of the pressure relief mechanism (110) facing an interior of the energy storage container (100), the interior of the energy storage container (100) being configured to accommodate at least one battery (10), and an enclosed space (102) being formed between the isolating member (120) and the pressure relief mechanism (110);
wherein the isolating member (120) is configured to be actuated when an internal pressure or temperature of the energy storage container (100) reaches a threshold, to relieve the internal pressure or temperature to the enclosed space (102), and the pressure relief mechanism (110) is configured to be actuated when a pressure or temperature of the enclosed space (102) reaches a threshold, to relieve the internal pressure or temperature to an exterior of the energy storage container (100).
